(19) Europäisches Patentamt
European Patent Office
Office européen des brevets

(11) **EP 2 223 059 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **08861326.0**

(22) Anmeldetag: **12.12.2008**

(51) Int Cl.:
*G01F 23/00* (2006.01)          *G01F 23/26* (2006.01)
*G01F 23/284* (2006.01)

(86) Internationale Anmeldenummer:
**PCT/EP2008/067370**

(87) Internationale Veröffentlichungsnummer:
**WO 2009/077434 (25.06.2009 Gazette 2009/26)**

(54) **VERFAHREN ZUR FÜLLSTANDSMESSUNG**

METHOD FOR FILLING LEVEL MEASUREMENT

PROCÉDÉ DE MESURE DU NIVEAU DE REMPLISSAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.12.2007 DE 102007061574**

(43) Veröffentlichungstag der Anmeldung:
**01.09.2010 Patentblatt 2010/35**

(73) Patentinhaber: **Endress + Hauser GmbH + Co. KG**
**79689 Maulburg (DE)**

(72) Erfinder:
• **MALINOVSKIY, Alexey**
**79689 Maulburg (DE)**
• **SCHROTH, Herbert**
**79650 Schopfheim (DE)**
• **SPANKE, Dietmar**
**79585 Steinen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A- 1 398 605          WO-A-2004/083791
DE-A1- 10 037 715          DE-A1- 19 510 484

**Beschreibung**

Die Erfindung betrifft ein Verfahren zur Füllstandsmessung.

Füllstandsmessungen werden heute bereits in einer Vielzahl von industriellen Anwendungen ausgeführt. Bei der klassischen Füllstandsmessung befindet sich in dem Behälter ein einziges Füllgut, dessen Füllstand mittels eines Füllstandsmessgeräts messtechnisch erfasst wird.

Daneben gibt es eine Vielzahl von Anwendungen, bei denen sich im Behälter nicht nur ein einziges Füllgut, sondern zwei unterschiedliche Füllgüter befinden können. Wenn sich in einem Behälter zwei verschiedene Füllgüter mit unterschiedlichem spezifischem Gewicht befinden, so liegt dasjenige Füllgut, das das geringere spezifische Gewicht aufweist, im Ruhezustand auf dem Füllgut mit dem höheren spezifischen Gewicht auf. Es bilden sich zwei voneinander völlig getrennte Schichten aus. Die Grenze zwischen den beiden Füllgütern wird als Trennschicht bezeichnet.

Trennschichten treten beispielsweise in der Petrochemie auf, wo sie z.B. durch Wasser und Kohlenwasserstoffe, z.B. Öl, gebildet werden. Ein weiteres Beispiel ist die Lebensmittelindustrie, wo sich Trennschichten beispielsweise in Fettabscheidern ausbilden.

Befinden sich zwei unterschiedliche Füllgüter im Behälter, so werden heute so genannte Trennschichtmessungen ausgeführt.

Trennschichtmessungen stellen eine Spezialform der Füllstandsmessung dar, und dienen dazu, die Lage der Trennschicht im Behälter und/oder die Füllhöhen der beiden Füllgüter im Behälter zu bestimmen. Die Füllhöhe bezeichnet die Höhe, die eine aus dem jeweiligen Füllgut bestehende Schicht im Behälter einnimmt. Trennschichtmessungen werden in vielen Bereichen der industriellen Messtechnik eingesetzt, um die im Behälter befindlichen Mengen, insb. deren Volumen und/oder deren Gewicht, der einzelnen Füllgüter zu ermitteln.

Trennschichtmessungen werden heute bereits mit nach dem Laufzeitprinzip arbeitenden Füllstandsmessgeräten durchgeführt, wie sie beispielsweise unter dem Produktnamen Levelflex und Mikropilot von der Anmelderin vertrieben werden.

Dabei wird ein elektromagnetisches Signal in den Behälter gesendet. Dies geschieht z.B. in dem das elektromagnetische Signal mittels einer Antenne in Form von freier Strahlung in den Behälter abgestrahlt wird, oder indem ein Wellenleiter in den Behälter eingeführt wird, an dem das elektromagnetische Signal in Form von geführten elektromagnetischen Wellen in den Behälter gesendet wird. Ein Anteil dieser elektromagnetischen Signale wird an der Füllgutoberfläche des oberen Füllguts reflektiert. Ein weiterer Anteil der Signale durchdringt das obere Füllgut und wird an der Trennschicht zwischen den beiden Füllgütern reflektiert. Das Messgerät empfängt ein durch diese Reflexionen gebildetes Echosignal und bestimmt daraus zum einen die Laufzeit, die zwischen dem Aussenden des Signals und dem Empfang des durch die Reflektion an der Füllgutoberfläche des oberen Füllguts entstandenen Echos vergeht und zum anderen die Laufzeit, die zwischen dem Aussenden des Signals und dem Empfang des durch die Reflektion an der Trennschicht bzw. an der Füllgutoberfläche des unteren Füllguts entstandenen Echosignals vergeht.

Die Bestimmung dieser beiden Laufzeiten erfolgt anhand von bekannten Laufzeit-Messmethoden. In Verbindung mit geführten elektromagnetischen Signalen wird beispielsweise die Zeitbereichsreflektometrie (Time Domain Reflection) verwendet. Dabei wird beispielsweise nach der Methode der geführten Mikrowelle, ein Hochfrequenzimpuls entlang eines Sommerfeldschen Wellenleiters, eines Goubauschen Wellenleiters oder eines Koaxialwellenleiters ausgesendet. Trifft dieses elektromagnetische Signal auf eine Füllgutoberfläche im Behälter, so wird zumindest ein Teil des Signals aufgrund des an dieser Mediengrenze bestehenden Impedanzsprunges zurückreflektiert. Die empfangene Signalamplitude als Funktion der Zeit stellt das Echosignal dar. Jeder Wert dieses Echosignals entspricht der Amplitude eines in einem bestimmten Abstand vom Sende- und Empfangselement reflektierten Echos. Die Echosignale weisen ausgeprägte Maxima auf, die den jeweils an einer der Füllgutoberflächen reflektierten Anteilen der elektromagnetischen Signale entsprechen. Aus der Zeitdifferenz zwischen dem Aussenden des elektromagnetischen Signals und dem Empfang der Maxima wird die gesuchte Laufzeit und damit auch die Lage der jeweiligen Füllgutoberfläche im Behälter ermittelt.

In Verbindung mit in Form von freier Strahlung in den Behälter abgestrahlten elektromagnetischen Signalen werden heute regelmäßig das Frequenzmodulations-Dauerstrichradar-Verfahren (FMCW-Verfahren) und das Pulsradar Verfahren eingesetzt. Beide Verfahren sind in der Füllstandsmesstechnik bekannt und daher hier nicht im Detail erläutert.

Anhand der baulichen Abmessungen der Messanordnung, insb. der Einbauhöhe des Füllstandmessgeräts im Bezug zu dem Behälter, und der Ausbreitungsgeschwindigkeiten der elektromagnetischen Signale in einem oberhalb des oberen Füllguts befindlichen Medium, z.B. Luft, und in dem oberen Füllgut lassen sich aus diesen beiden Laufzeiten die Füllhöhen der beiden Füllguter im Behälter und der insgesamt vorliegende Füllstand im Behälter berechnen.

Die baulichen Abmessungen der Messanordnung und die Ausbreitungsgeschwindigkeit der elektromagnetischen Signale in dem oberhalb des oberen Füllguts befindlichen Medium sind in der Regel bekannt. Die Kenntnis der Ausbreitungsgeschwindigkeit der elektromagnetischen Signale im oberen Füllgut kann beispielsweise anhand der Dielektrizitätskonstanten dieses Füllguts berechnet oder experimentell bestimmt werden. Ist die Dielektrizitätskonstante des oberen Füllguts nicht bekannt und kann die Ausbreitungsgeschwindigkeit z.B. aus organisatorischen Gründen, nicht experimentell bestimmt werden, so ist auf die beschriebene Weise keine Trennschichtmessung möglich.

Trennschichtmessungen mit nach dem Laufzeitprinzip arbeitenden Füllstandsmessgeräten liefern sehr gute Ergebnisse, wenn die Mediengrenzen an der Oberfläche des oberen Füllguts und zwischen den beiden Füllgütern scharf ausgeprägt sind. Dies ist insb. dann der Fall, wenn sich die Füllgüter im Behälter im Ruhezustand befinden. Es gibt aber eine Vielzahl von Anwendungen, bei denen die Füllgüter, z.B. durch Zufuhr oder Ablassen von Füllgut, nie lange genug sich selbst überlassen sind, um in den Ruhezustand zu gelangen, in dem die beiden Füllgüter völlig voneinander getrennt in zwei Schichten mit scharf ausgebildeten Oberflächen aufeinander liegen. Im Behälter kann sich Schaum oder Emulsion bilden. Während an scharf ausgeprägten Mediengrenzen ein Impedanzsprung vorliegt, der eine Teilreflektion des Signal an dieser Mediengrenze bewirkt, führen Schaumbildung und/oder Emulsionsbildung in der Regel dazu, das kein ausgeprägter durch die Mediengrenze eng lokalisierter Impedanzsprung sondern ein kontinuierlicher Übergang vorliegt. Dies kann im schlimmsten Fall dazu führen, dass das Echosignal beim Vorliegen von Schaum und/oder Emulsion nur ein oder kein ausgeprägtes Maximum aufweist, dessen Laufzeit gemessen werden kann. Liegt nur ein Maximum vor, so ist anhand des Echosignals nicht mehr erkennbar, ob es auf eine Reflektion des Signals an der Füllgutoberfläche des oberen oder des unteren Füllguts zurückgeht. Eine Trennschichtmessung ist in dem Fall nicht mehr möglich.

Trennschichtmessungen können in begrenztem Umfang auch mit kapazitiven Füllstandmessgeräten, wie sie beispielsweise von der Anmelderin vertrieben werden, ausgeführt werden. Ein solches Verfahren ist beispielsweise in dem 1990 erschienen Buch: Füllstandsmesstechnik in Theorie und Praxis von Wim van de Kamp im Kapitel 3.6 beschrieben.

Hierzu wird eine kapazitive Sonde in den Behälter eingeführt und eine Kapazität eines durch die Sonde und die diese umgebende Behälterwand gebildeten Kondensators gemessen. Die gemessene Kapazität entspricht der Summe aus einer Grundkapazität des leeren Behälters, dem Produkt aus einem füllgutspezifischen Kapazitätszunahmefaktor des oberen Füllguts und dessen Füllhöhe und dem Produkt aus einem füllgutspezifischen Kapazitätszunahmefaktor des unteren Füllguts und dessen Füllhöhe.

Dieses Verfahren ist jedoch nur dann einsetzbar, wenn die beiden füllgutspezifischen Kapazitätszunahmefaktoren und der durch die beiden Füllgüter insgesamt im Behälter vorliegende Füllstand bekannt sind. Letzterer entspricht der Summe der Füllhöhe des oberen und der Füllhöhe des unteren Füllguts und muss entweder aufgrund von anwendungs-spezifischen Gegebenheiten bekannt sein oder separat gemessen werden.

Es sind klassische Füllstandsmessgeräte zur Messung eines Füllstandes eines einzigen in einem Behälter enthaltenen Füllguts bekannt, bei denen das Laufzeitmessprinzip mit dem kapazitiven Messprinzip in einem Messgerät kombiniert wird. Ein Beispiel hierzu ist die in der DE 100 37 715 A1 der Anmelderin beschriebene Vorrichtung zur Messung eines Füllstandes eines einzigen in einem Behälter enthaltenen Füllguts. Die Vorrichtung umfasst eine Sonde, die wahlweise als kapazitive Sonde eines klassischen kapazitiven Füllstandsmessgeräts als auch als Wellenleiter eines nach dem Laufzeitprinzip arbeitenden klassischen Füllstandsmessgeräts betrieben werden kann.

Ein weiteres Beispiel ist in der DE-A1 195 10 484 beschrieben. Diese Anmeldung beschreibt ein nach dem Laufzeitprinzip arbeitendes Füllstandsmessgerät mit einem Wellenleiter, bei dem in dem Wellenleiter ein metallischer Innenleiter vorgesehen ist, der als kapazitive Sonde dient. Es ist angegeben, dass durch die Kombination dieser beiden Messprinzipien in einem Messgerät im Hinblick auf die klassische Füllstandsmessung ein redundantes System gegeben ist, bei dem die kapazitive Sonde als Überfüllsicherung einsetzbar ist.

Es ist eine Aufgabe der Erfindung ein Verfahren zur Füllstandsmessung anzugeben, mit dem in einem Behälter, in dem sich ein erstes und/oder ein zweites Füllgut befinden, für jedes im Behälter enthaltene Füllgut eine Lage bestimmt wird, die der Lage entspricht, die die Füllgutoberfläche des jeweiligen Füllguts aufgrund der Menge des im Behälter enthaltenen ersten Füllguts und der Menge des im Behälter enthaltenen zweiten Füllguts einnimmt, wenn die gesamte Menge jedes Füllguts im Behälter eine einzige nur dieses Füllgut enthaltende Schicht ausbildet.

Diese anhand der Erfindung zu bestimmende Lage wird von den Füllgutoberflächen insb. immer dann eingenommen, wenn sich die Füllgüter im Behälter im Ruhezustand befinden. Der Ruhezustand bezeichnet den Zustand, in dem jedes der Füllgüter eine scharf abgegrenzte Schicht ausbildet, in der sich die gesamte Menge dieses Füllguts völlig getrennt von dem gegebenenfalls enthaltenen weiteren Füllgut befindet. Im Ruhezustand befindet sich kein Schaum auf der Füllgutoberfläche und es sind keine Emulsionsschichten vorhanden. Die anhand der Erfindung bestimmten Lagen werden nachfolgend als Ruhelagen der jeweiligen Füllgutoberflächen bezeichnet.

Hierzu besteht die Erfindung in einem Verfahren zur Füllstandsmessung in einem Behälter, in dem sich eine Menge eines ersten Füllguts und/oder eine Menge eines zweiten Füllgut befinden, wobei das erste Füllgut ein geringeres spezifisches Gewicht aufweist als das zweite Füllgut, und die beiden Füllgüter verschiedene Dielektrizitätskonstanten aufweisen, bei dem

- ein elektromagnetisches Signal in den Behälter gesendet wird,
- an mindestens einer durch die im Behälter enthaltenen Füllgüter erzeugten Mediengrenze eine Reflektion stattfindet, bei der ein Anteil des Signals reflektiert wird, und
- für jeden reflektierten Anteil eine von der Lage der die Reflektion auslösenden Mediengrenze abhängige Laufzeit gemessen wird, die dieser Anteil des Signals für den Weg zu dieser Mediengrenze und zurück benötigt,

- eine von den Mengen der im Behälter befindlichen Füllgütern abhängige Kapazität zwischen einer kapazitiven Sonde und einer Referenzelektrode gemessen wird, und
- anhand der gemessenen Kapazität und der gemessenen Laufzeiten für jedes im Behälter enthaltene Füllgut eine Lage bestimmt wird, die der Lage entspricht, die die Füllgutoberfläche des jeweiligen Füllguts aufgrund der Menge des im Behälter enthaltenen ersten Füllguts und der Menge des im Behälter enthaltenen zweiten Füllguts einnimmt, wenn die gesamte Menge jedes im Behälter enthaltenen Füllguts im Behälter eine einzige nur dieses Füllgut enthaltende Schicht ausbildet.

Gemäß einer Weiterbildung wird anhand dieser Lagen festgestellt, ob sich nur das erste, nur das zweite Füllgut oder beide Füllgüter im Behälter befinden.

Gemäß einer Weiterbildung des Verfahrens wird in den Fällen in denen eine von der Lage einer ersten Mediengrenze abhängige erste Laufzeit, eine von der Lage einer zweiten Mediengrenze abhängige zweite Laufzeit, und die Kapazität gemessen werden, anhand von zwei dieser drei Messgrößen für jedes im Behälter enthaltene Füllgut die Lage bestimmt, die der Lage entspricht, die die Füllgutoberfläche des jeweiligen Füllguts aufgrund der Menge des im Behälter enthaltenen ersten Füllguts und der Menge des im Behälter enthaltenen zweiten Füllguts einnimmt, wenn die gesamte Menge jedes im Behälter enthaltenen Füllguts im Behälter eine einzige nur dieses Füllgut enthaltende Schicht ausbildet, und die Ergebnisse dieser Ableitungen werden anhand der dritten Messgröße überprüft.

Gemäß einer weiteren Weiterbildung des erfindungsgemäßen Verfahrens wird in den Fällen, in denen eine von der Lage einer ersten Mediengrenze abhängige erste Laufzeit, eine von der Lage einer zweiten Mediengrenze abhängige zweite Laufzeit, und die Kapazität gemessen werden, anhand der gemessenen ersten Laufzeit, der gemessenen zweiten Laufzeit und der Kapazität mindestens eine material-spezifische Konstante des ersten Füllguts ermittelt, und die Lagen, die die Füllgutoberflächen der jeweiligen Füllgüter aufgrund der Menge des im Behälter enthaltenen ersten Füllguts und der Menge des im Behälter enthaltenen zweiten Füllguts einnehmen, wenn die gesamte Menge jedes im Behälter enthaltenen Füllguts im Behälter eine einzige nur dieses Füllgut enthaltende Schicht ausbildet, werden anhand von mindestens zwei der drei gemessenen Größen und der material-spezifischen Konstante ermittelt.

Gemäß einer Weiterbildung der letztgenannten Weiterbildung ist die material-spezifische Konstante eine Dielektrizitätskonstante des ersten Füllguts.

Gemäß einer Weiterbildung der letztgenannten Weiterbildung wird anhand der Dielektrizitätskonstante des ersten Füllguts eine Ausbreitungsgeschwindigkeit der elektromagnetischen Signale in dem ersten Füllgut und ein Kapazitätszunahmefaktor des ersten Füllguts bestimmt, wobei der Kapazitätszunahmefaktor eine Zunahme der Kapazität in Abhängigkeit von einer Füllhöhe des ersten Füllguts angibt.

Gemäß einer weiteren Weiterbildung des erfindungsgemäßen Verfahrens wird für den Fall, dass nur eine Laufzeit bestimmt werden konnte,

- eine Hypothese dafür aufgestellt, an welcher Mediengrenze die für die gemessene Laufzeit maßgebliche Reflektion stattgefunden hat,
- es wird für jedes im Behälter enthaltene Füllgut anhand der gemessenen Laufzeit, der gemessenen Kapazität und der Hypothese die Lage bestimmt, die die Füllgutoberfläche des jeweiligen Füllguts aufgrund der Menge des im Behälter enthaltenen ersten Füllguts und der Menge des im Behälter enthaltenen zweiten Füllguts einnimmt, wenn die gesamte Menge jedes im Behälter enthaltenen Füllguts im Behälter eine einzige nur dieses Füllgut enthaltende Schicht ausbildet,
- es werden die auf der Grundlage der Hypothese bestimmten Lagen anhand von physikalischen Randbedingungen auf deren Richtigkeit überprüft, und
- es wird dieses Verfahren mit einer geänderten Hypothese wiederholt, falls die Überprüfung einen Widerspruch ergibt.

Gemäß einer Ausgestaltung besteht eine physikalische Randbedingung darin, das die Lagen innerhalb des Behälters liegen.

Gemäß einer bevorzugten Ausgestaltung werden die Lagen, die die Füllgutoberflächen der einzelnen Füllgüter aufgrund der Menge des im Behälter enthaltenen ersten Füllguts und der Menge des im Behälter enthaltenen zweiten Füllguts einnehmen, wenn die gesamte Menge jedes Füllguts im Behälter enthaltenen Füllguts eine einzige nur dieses Füllgut enthaltende Schicht ausbildet

- in Form von Füllhöhen, die die Füllgüter im Behälter einnehmen, oder
- in Form eines Abstandes der jeweiligen Füllgutoberfläche vom Behälterboden, oder
- in Form eines Abstandes der jeweiligen Füllgutoberfläche zu Sender und Empfänger des elektromagnetischen Signals oder
- in Form eines Abstandes zwischen der jeweiligen Füllgutoberfläche zu einer maximal zulässigen Füllstandsobergrenze im Behälter angegeben.

Gemäß einer Ausgestaltung des Verfahrens werden die Laufzeitmessungen und die Kapazitätsmessungen mit einem einzigen Füllstandsmessgerät ausgeführt, das eine einzige Sonde aufweist, die sowohl als kapazitive Sonde als auch als Wellenleiter für die elektromagnetischen Signale dient.

Das erfindungsgemäße Messverfahren weist den Vorteil auf, dass es sowohl zur klassischen Füllstandsmessung eines Füllstandes eines einzigen im Behälter befindlichen Füllguts als auch zur Trennschichtmessung einsetzbar ist. Das Verfahren erkennt selbsttätig, ob sich im Behälter nur das erste, nur das zweite oder beide Füllgüter befinden, und es liefert je nach Befüllsituation automatisch eine klassische Füllstandsmessung oder eine Trennschichtmessung.

Das erfindungsgemäße Füllstandsmessverfahren weist gegenüber einem rein kapazitiven Trennschichtmessverfahren den Vorteil auf, dass es auch dann einsetzbar ist, wenn der Gesamtfüllstand im Behälter nicht bekannt ist. Der Gesamtfüllstand wird durch das erfindungsgemäße Füllstandsmessverfahren automatisch mit erfasst, und kann als weiteres Messergebnis zur Verfügung gestellt werden.

Ein weiterer Vorteil des erfindungsgemäßen Verfahrens besteht darin, dass es unabhängig davon, ob sich nur das erste, nur das zweite oder beide Füllgüter im Behälter befinden auch dann noch einwandfreie Messergebnisse liefert, wenn mit dem nach dem Laufzeitprinzip arbeitenden Füllstandsmessgerät nur eine einzige Laufzeit gemessen werden konnte und nicht bekannt ist an welcher Mediengrenze die für diese Laufzeit maßgebliche Reflektion stattgefunden hat.

Die Erfindung und deren Vorteile werden nun anhand der Figuren der Zeichnung, in denen ein Ausführungsbeispiel dargestellt ist, näher erläutert; gleiche Teile sind in den Figuren mit gleichen Bezugszeichen versehen.

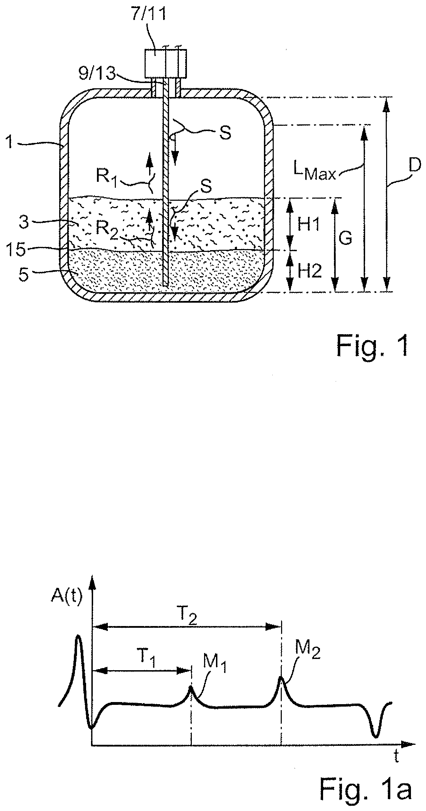

Fig. 1 zeigt: eine schematische Darstellung einer Messanordnung mit einem Behälter in dem sich ein Schicht eines ersten Füllguts und eine Schicht eines zweiten Füllguts befinden;

Fig. 1 a zeigt ein beim Vorliegen der in Fig. 1 dargestellten Befüllsituation aufgenommenes Echosignal;

Fig. 2 zeigt: die Messanordnung von Fig. 1, wobei sich im Behälter eine Emulsionsschicht befindet, auf der eine aus dem ersten Füllgut bestehende Schicht aufliegt;

Fig. 2a zeigt: ein beim Vorliegen der in Fig. 2 dargestellten Befüllsituation aufgenommenes Echosignal, das entsteht, wenn das elektromagnetische Signal an der Füllgutoberfläche des ersten Füllguts und an der Oberfläche der Emulsion reflektiert wird;

Fig. 2b zeigt: ein beim Vorliegen der in Fig. 2 dargestellten Befüllsituation aufgenommenes Echosignal, das entsteht, wenn das elektromagnetische Signal ausschließlich an der Füllgutoberfläche des ersten Füllguts reflektiert wird;

Fig. 3 zeigt: die Messanordnung von Fig. 1, wobei sich im Behälter eine aus dem zweiten Füllgut bestehende Schicht befindet, auf der sich eine Emulsionsschicht befindet;

Fig. 3a zeigt: ein beim Vorliegen der in Fig. 3 dargestellten Befüllsituation aufgenommenes Echosignal, das entsteht, wenn das elektromagnetische Signal an der Füllgutoberfläche des zweiten Füllguts und an der Oberfläche der Emulsion reflektiert wird;

Fig. 3b zeigt: ein beim Vorliegen der in Fig. 3 dargestellten Befüllsituation aufgenommenes Echosignal, das entsteht, wenn das elektromagnetische Signal ausschließlich an der Oberfläche der Emulsion reflektiert wird;

Fig. 4 zeigt: die Messanordnung von Fig. 1, wobei sich im Behälter nur das erste Füllgut, nur das zweite Füllgut oder ausschließlich eine Emulsionschicht befindet;

Fig. 4a zeigt:    ein beim Vorliegen der in Fig. 4 dargestellten Befüllsituation aufgenommenes Echosignal;

Fig. 5 zeigt:    die Messanordnung von Fig. 1, wobei sich im Behälter eine aus dem zweiten Füllgut bestehende Schicht, eine aus dem ersten Füllgut bestehende Schicht und Schaum befinden;

Fig. 5a zeigt:    ein beim Vorliegen der in Fig. 5 dargestellten Befüllsituation aufgenommenes Echosignal;

Fig. 6 zeigt:    die Messanordnung von Fig. 1, wobei sich im Behälter eine aus dem zweiten Füllgut bestehende Schicht, eine aus dem ersten Füllgut bestehende Schicht und eine zwischen den beiden Schichten angeordnete Emulsionsschicht befinden;

Fig. 6a zeigt:    ein beim Vorliegen der in Fig. 6 dargestellten Befüllsituation aufgenommenes Echosignal;

Fig. 1 zeigt eine schematische Darstellung einer Messanordnung mit der das erfindungsgemäße Verfahren zur Füllstandsmessung durchführbar ist. Sie umfasst einen Behälter 1 in dem sich eine unbekannte Menge eines ersten Füllguts 3 und/oder eine unbekannte Menge eines zweiten Füllguts 5 befinden können. Sind zwei verschiedene Füllgüter 3, 5 vorhanden, so wird hier davon ausgegangen, dass das erste Füllgut 3 ein geringeres spezifisches Gewicht aufweist als das zweite Füllgut 5. Außerdem weisen die Füllgüter 3, 5 unterschiedliche Dielektrizitätskonstanten auf.

Fig. 1 zeigt eine Befüllsituation, bei der sich beide Füllgüter 3, 5 im Ruhezustand im Behälter 1 befinden. Das erste Füllgut 3 bildet im Behälter 1 eine obere Schicht der Füllhöhe H1 und das zweite Füllgut 5 eine darunter befindliche untere Schicht der Füllhöhe H2. Bei dem ersten Füllgut 3 handelt es sich beispielsweise um ein Öl, und bei dem zweiten Füllgut 5 um Wasser. Oberhalb des ersten Füllguts 3 befindet sich ein Medium, wie z.B. Luft oder ein Gas, im Behälter 1.

Es ist ein nach dem Laufzeitprinzip arbeitendes Füllstandsmessgeräts 7 vorgesehen, dass dazu dient, elektromagnetische Signale S in den Behälter 1 zu senden. Hierzu eignen sich alle in der Beschreibungseinleitung bereits erwähnten nach dem Laufzeitprinzip arbeitenden Füllstandsmessgeräte. In dem dargestellten Ausführungsbeispiel ist das Füllstandsmessgerät 7 ein Messgerät, dass einen in den Behälter 1 eingeführten Wellenleiter 9 umfasst, entlang dem elektromagnetische Signale S in Form von vom Wellenleiter 9 geführten elektromagnetischen Wellen in den Behälter 1 gesendet werden.

Zusätzlich ist ein kapazitives Füllstandsmessgeräts 11 vorgesehen, dass dazu dient, eine von den Mengen der im Behälter 1 befindlichen Füllgüter 3, 5 abhängige Kapazität C zwischen einer kapazitiven Sonde 13 und einer Referenzelektrode 15 zu bestimmen. In dem dargestellten Ausführungsbeispiel bildet die Behälterwand die Referenzelektrode 15.

Das kapazitive Füllstandsmessgerät 11 und das nach dem Laufzeitprinzip arbeitende Füllstandsmessgerät 7 können zwei völlig getrennte Messgeräte sein, die unabhängig voneinander auf dem Behälter 1 montiert sind. Vorzugsweise werden beide Füllstandsmessprinzipien jedoch, wie hier dargestellt, in einem einzigen Füllstandsmessgerät 7/11 integriert, das nur eine einzige Sonde 9/13 aufweist, die sowohl als kapazitive Sonde 13 als auch als Wellenleiter 9 für die elektromagnetischen Signale S dient.

Das nach dem Laufzeitprinzip arbeitende Füllstandsmessgerät 7 sendet elektromagnetische Signale S in den Behälter 1. Dabei findet an mindestens einer im Behälter 1 befindlichen Mediengrenze eine Reflektion statt, bei der ein Anteil, hier R1, R2, des Signals S reflektiert wird. Diese Mediengrenzen können durch die Füllgutoberfläche des ersten Füllguts 3, die Füllgutoberfläche des zweiten Füllguts 5 und/oder eine Oberfläche einer im Behälter 1 durch eine Durchmischung der beiden Füllgüter 3, 5 entstandene Emulsionsschicht gebildet sein.

Bei dem in Fig. 1 dargestellten Beispiel wird der Anteil R1 dieser elektromagnetischen Signale S an der Füllgutoberfläche des ersten Füllguts 3 und der Anteil R2 der Signale an der Füllgutoberfläche des zweiten Füllguts 5 reflektiert. Das Messgerät 7 empfängt ein durch diese Reflexionen entstehendes Echosignal und zeichnet eine Amplitude A(t) des Echosignals als Funktion der Zeit t auf. Fig. 1a zeigt die Amplitude A(t) dieses Echosignals als Funktion der Zeit t.

Das Echosignal weist zwei ausgeprägte Maxima M1, M2 auf, von denen ein erstes nach einer Laufzeit T1 empfangendes Maximum M1 von der Reflektion an der Füllgutoberfläche des ersten Füllguts 3 stammt und ein zweites nach einer Laufzeit T2 empfangenes Maximum M2 von der Reflektion an der Füllgutoberfläche des zweiten Füllguts 5 stammt.

Für die Laufzeit T1 gilt:

$$T1 = 2 \, ( D - H1 - H2) / v_0 \qquad\qquad (1)$$

wobei

$v_0$ eine Ausbreitungsgeschwindigkeit des elektromagnetischen Signals in dem oberhalb des oberen Füllguts 3 befindlichen Medium,

D einen von einer Einbauhöhe des Messgeräts 7 abhängigen Abstand zwischen Sender und Empfänger des elektromagnetischen Signals und einem Behälterboden,

H1 eine Füllhöhe des ersten Füllguts, und

H2 eine Füllhöhe des zweiten Füllguts bezeichnen.

Die Füllhöhe H1/H2 bezeichnet dabei die Höhe, die die aus dem jeweiligen Füllgut 3/5 bestehende Schicht im Behälter 1 im Ruhezustand einnimmt. Durch die Angabe beider Füllhöhen H1, H2 sind die Lagen der beiden zugehörigen Füllgutoberflächen im Behälter 1 eindeutig definiert.

Gleichung (1) gilt auch dann in unveränderter Form, wenn sich in dem Behälter 1 nur das erste Füllgut 3 befindet. In dem Fall beträgt die Füllhöhe H2 des nicht enthaltenen Füllguts 5 Null.

Für die Laufzeit T2 gilt:

$$T2 = 2 ( D - H1 - H2) / v_0 + 2 H1 / v_1 \qquad (2)$$

wobei

$v_0$ eine Ausbreitungsgeschwindigkeit des elektromagnetischen Signals in dem oberhalb des ersten Füllguts befindlichen Medium,

$v_1$ eine Ausbreitungsgeschwindigkeit des elektromagnetischen Signals in dem ersten Füllgut 3,

D einen von einer Einbauhöhe des Messgeräts 7 abhängigen Abstand zwischen Sender und Empfänger des elektromagnetischen Signals und einem Behälterboden,

H1 eine Füllhöhe des ersten Füllguts 3, und

H2 eine Füllhöhe des zweiten Füllguts 5 bezeichnen.

Gleichung (2) gilt auch dann in unveränderter Form, wenn sich in dem Behälter 1 nur das zweite Füllgut 5 befindet. In dem Fall beträgt die Füllhöhe H1 des nicht enthaltenen ersten Füllguts 3 Null.

Für die gemessene Kapazität C gilt:

$$C = C0 + a H2 + b H1 \qquad (3)$$

wobei

C0 eine Grundkapazität des leeren Behälters,

a einen von den physikalischen Eigenschaften des zweiten Füllguts abhängigen Kapazitätszunahmefaktor, und

b einen von den physikalischen Eigenschaften des ersten Füllguts abhängigen Kapazitätszunahmefaktor bezeichnen.

Gleichung (3) gilt auch dann in unveränderter Form, wenn sich im Behälter 1 nur eines der beiden Füllgüter 3 oder 5 befindet oder wenn der Behälter 1 leer ist. In dem Fall betragen die Füllhöhen H1 und/oder H2 der nicht enthaltenen Füllgüter 3 und/oder 5 Null.

Die in den Gleichungen (1), (2) und (3) verwendeten physikalischen Konstanten D, C0, $v_0$, $v_1$, a und b werden, soweit dies nicht explizit anders angegeben ist, als bekannt vorausgesetzt.

Hier wird davon ausgegangen, dass die Sonde 9/13 bis zum Behälterboden reicht. Die Gleichungen gelten natürlich auch dann in analoger Form, wenn die Sonde nicht ganz bis zum Behälterboden reicht. In dem Fall können die Reflektionen natürlich nur entlang des durch die Sonde abgedeckten Bereichs im Behälter erzeugt werden, und die gemessene Kapazität kann ebenfalls nur entlang des durch die Sonde abgedeckten Bereichs gemessen werden. In diesem Fall entspricht der Abstand D dem Abstand zwischen der Einbauhöhe des Messgeräts 7 und dem in dem Behälter befindlichen Ende der Sonde und die Füllhöhen H1, H2 entsprechen den Höhen entlang der Sonde. Das erfindungsgemäße Verfahren ist aber ansonsten völlig analog ausführbar.

Erfindungsgemäß wird mittels des nach dem Laufzeitprinzip arbeitenden Füllstandsmessgeräts 7 ein elektromagnetisches Signal in den Behälter 1 gesendet. Für die Durchführung des Verfahrens ist es erforderlich, dass an mindestens einer durch die im Behälter 1 enthaltenen Füllgüter 3 und/oder 5 erzeugten Mediengrenze eine Reflektion stattfindet, bei der ein Anteil Rx, Ry des Signals S reflektiert wird und eine von der Lage der die Reflektion auslösenden Mediengrenze abhängige Laufzeit Tx, Ty gemessen wird, die dieser Anteil Rx, Ry des Signals S für den Weg zu dieser Mediengrenze und zurück benötigt. Parallel dazu wird mit dem kapazitiven Füllstandsmessgerät 11 die von den Mengen der im Behälter 1 befindlichen Füllgüter 3, 5 abhängige Kapazität C gemessen.

Anschließend werden anhand der gemessenen Kapazität C und der gemessenen Laufzeiten Tx und/oder Ty für jedes im Behälter 1 enthaltene Füllgut 3, 5 dessen Ruhelage bestimmt. Die Ruhelage bezeichnet die Lage, die der Lage entspricht, die die Füllgutoberfläche des jeweiligen Füllguts 3, 5 aufgrund der Menge des im Behälter 1 enthaltenen ersten Füllguts 3 und der Menge des im Behälter 1 enthaltenen zweiten Füllguts 5 einnimmt, wenn die gesamte Menge jedes Füllguts 3, 5 im Behälter 1 eine einzige die gesamte Menge dieses Füllgut 3, 5 enthaltende Schicht ausbildet.

Ist der Behälter 1, wie in Fig. 1 dargestellt, mit den beiden Füllgütern 3 und 5 befüllt, so liefert das Füllstandsmessgerät 7 im Idealfall zwei Laufzeiten Tx und Ty. Da sowohl Schaum als auch Emulsion in der Regel eine Laufzeitmessung unmöglich machen, werden zwei Laufzeiten typischer Weise nur dann gemessen, wenn beide Füllgüter 3, 5 im Behälter 1 enthalten sind, und sich wie in Fig. 1 dargestellt im Ruhezustand befinden.

Es wird nun festgestellt, welches die kürzere der beiden Laufzeiten Tx und Ty ist. Erfindungsgemäß wird in diesem Fall die kürzere Laufzeit, hier Tx mit Tx < Ty, einer Reflektion an der Füllgutoberfläche des oberen ersten Füllguts 3 zugeordnet, und die längere Laufzeit, hier Ty mit Ty > Tx, wird einer Reflektion an der Füllgutoberfläche des unteren Füllguts 5 zugeordnet. Dementsprechend gilt: Tx = T1 und Ty = T2. Die Füllhöhen H1 und H2 können nun anhand der drei Gleichungen (1), (2) und (3) berechnet werden.

Dabei bilden die drei Gleichungen (1), (2) und (3) für die Bestimmung der zwei unbekannten Füllhöhen H1 und H2 ein überbestimmtes Gleichungssystem.
Vorzugsweise wird in diesem Fall derart verfahren, dass die Füllhöhen H1 und H2 anhand von zwei der drei gemessenen Messgrößen T1, T2, C abgeleitet werden, und die Ergebnisse dieser Ableitungen anhand der dritten Messgröße überprüft werden.

Es werden beispielsweise die Füllhöhen H1 und H2 anhand der beiden Laufzeiten T1 und T2 unter Verwendung von Gleichung (1) und (2) bestimmt zu:

$$H1 = (T2 - T1)\ 0{,}5\ v_1 \qquad\qquad\qquad\qquad (4)$$

und

$$H2 = D - T1\ 0{,}5\ v_0 - (T2 - T1)\ 0{,}5\ v_1 \qquad\qquad\qquad\qquad (5)$$

Anhand der auf diese Weise abgeleiteten Füllhöhen H1 und H2 kann nun durch Einsetzen der Ergebnisse in Gleichung (3) eine zugehörige Kapazität C' berechnet werden, und mit der gemessenen Kapazität C verglichen werden. Dies ermöglicht die Überprüfung der Messergebnisse für H1 und H2 anhand der unabhängig hiervon gemessenen Kapazität C.

Alternativ kann in diesem Fall anhand der gemessenen ersten Laufzeit Tx = T1, der gemessenen zweiten Laufzeit Ty = T2 und der gemessenen Kapazität C mindestens eine material-spezifische Konstante des oberen Füllguts 3 ermittelt werden. Die material-spezifische Konstante ist beispielsweise die Ausbreitungsgeschwindigkeit $v_1$ des elektromagnetischen Signals S im ersten Füllgut 3 oder der Kapazitätszunahmefaktor b für das erste Füllgut 3. In dem Fall können die Lage der Oberfläche des ersten Füllguts 3 und die Lage der Oberfläche des zweiten Füllguts 5 anhand der drei Messgrößen T1, T2 und C und der ermittelten material-spezifischen Konstante ermittelt werden. Die material-spezifische Konstante braucht in diesem Fall nicht vorab bekannt zu sein.

Vorzugsweise ist die material-spezifische Konstante die Dielektrizitätskonstante $\varepsilon$ des ersten Füllguts 3. Dabei wird die physikalische Tatsache ausgenutzt, dass sowohl die Ausbreitungsgeschwindigkeit $v_1$ des elektromagnetischen Signals S im ersten Füllgut 3 als auch der Kapazitätszunahmefaktor b für das erste Füllgut 3 maßgeblich durch die Dielektrizitätskonstante $\varepsilon$ des ersten Füllguts 3 bestimmt sind. Sowohl die Ausbreitungsgeschwindigkeit $v_1$ als auch der Kapazitätszunahmefaktor b können in Form von hierfür anhand der für die Messung vorliegenden physikalischen Gegebenheiten aufgestellten physikalischen Formeln $v_1 = f(\varepsilon)$ und $b = g(\varepsilon)$ als Funktion der Dielektrizitätskonstanten $\varepsilon$ ausgedrückt und berechnet werden.

So gilt für die Ausbreitungsgeschwindigkeit von elektromagnetischen Signalen in einem Füllgut näherungsweise: $v1 \approx K1\ \varepsilon^{-1/2}$, wobei K1 eine aus den physikalischen Bedingungen formelmäßig ableitbare oder experimentell messbare Konstante ist. Für den Kapazitätszunahmefaktor eines Zylinderkondensators gilt: $b \approx K2\ \varepsilon$, wobei K2 eine anhand der Geometrie und der Abmessungen des Zylinderkondensators berechenbare oder experimentell bestimmbare Konstante ist.

Durch das Einsetzen der physikalischen Formeln $v_1 = f(\varepsilon)$ und $b = g(\varepsilon)$ für die Ausbreitungsgeschwindigkeit $v_1$ und den Kapazitätszunahmefaktor b in den Gleichungen (2) und (3) steht nun mit den Gleichungen (1), (2) und (3) ein Gleichungssystem mit drei Gleichungen (1), (2), (3) und drei Unbekannten H1, H2, $\varepsilon$ zur Verfügung, mit dem alle drei Unbekannten iterativ berechnet werden. In diesem Fall können die Lagen der beiden Füllgutoberflächen auch dann mit dem erfindungsgemäßen Verfahren bestimmt werden, wenn nicht bekannt ist, welche Füllgüter 3, 5 sich in dem Behälter 1 befinden.

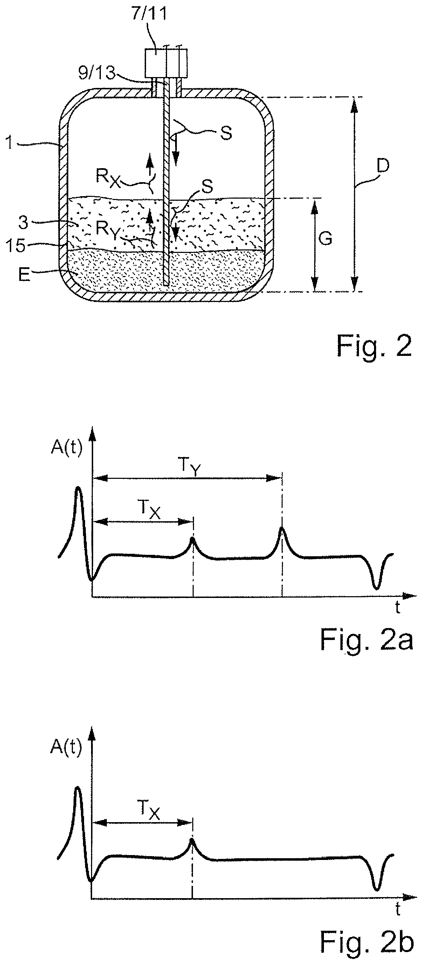

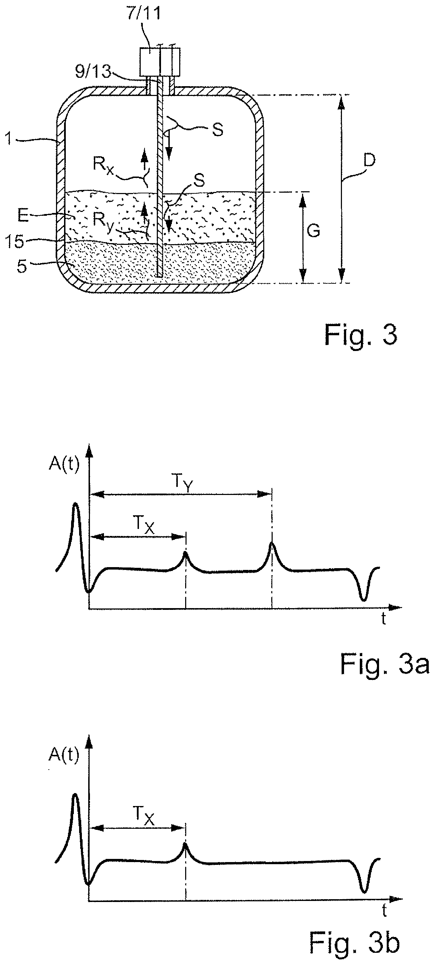

Es gibt wenige Ausnahmefälle, bei denen auch dann zwei Laufzeiten Tx, Ty gemessen werden können, wenn sich zwei Füllgüter 3, 5 im Behälter 1 befinden, aber kein Ruhezustand vorliegt. Dies ist dann der Fall, wenn die Füllgüter 3, 5 Emulsionen mit sehr guten Reflektionseigenschaften bilden und sich eine solche Emulsionsschicht E, wie in Fig. 2 dargestellt, im Behälter 1 unter einer ausschließlich aus dem ersten Füllgut 3 bestehenden Schicht befindet oder wenn sich eine solche Emulsionsschicht E, wie in Fig. 3 dargestellt, auf einer ausschließlich aus dem zweiten Füllgut 5 bestehenden Schicht befindet. Fig. 2a und 3a zeigen die zugehörigen Echosignale A(t). In diesen Fällen werden die gesuchten Lagen, die die Füllgutoberflächen im Ruhezustand einnehmen vorzugsweise anhand von Gleichung (1) und Gleichung (3) bestimmt. Dabei wird angenommen, dass die kürzere der beiden Laufzeiten Tx von der Reflektion an der Füllgutoberfläche des ersten Füllguts 3 stammt. In Gleichung (1) geht nur die gesamte Füllhöhe G = H1 +H2 ein, die beide Füllgüter 3, 5 zusammen im Behälter 1 einnehmen ein. Die gesamte Füllhöhe G ist aber unabhängig davon, ob die Füllgüter 3, 5 in getrennten Schichten im Behälter angeordnet sind, oder ganz oder teilweise zu einer Emulsion durchmischt wurden. Das gleiche gilt für die gemessene Kapazität C. Sie ist ausschließlich abhängig von den Mengen der im Behälter 1 enthaltenen beiden Füllgütern 3, 5. Sie ist jedoch völlig unabhängig davon, ob die Füllgüter 3, 5 in getrennten Schichten oder in vollständiger oder teilweiser Durchmischung vorliegen. Einsetzen der gemessenen Kapazität C und der kürzeren Laufzeit Tx als T1 in die Gleichungen (1) und (3) liefert ein Gleichungssystem für die Bestimmung von H1 und H2. Die auf diese Weise berechneten Füllhöhen H1, H2 entsprechen den Füllhöhen die diese Füllgüter 3, 5 tatsächlich im Ruhezustand im Behälter 1 einnehmen würden, nachdem sich die Emulsionsschicht E in ihre Bestandteile aufgetrennt hat und die Füllgutoberflächen deren Ruhelagen einnehmen.

Es gibt jedoch auch eine Vielzahl von Anwendungen, bei denen mit dem nach dem Laufzeitprinzip arbeitenden Füllstandsmessgerät 7 nur eine einzige Laufzeit Tx gemessen werden kann.

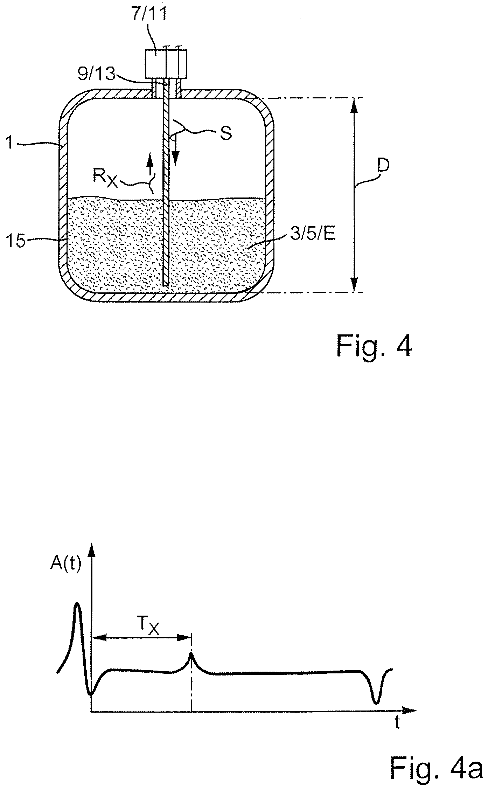

Dies ist z.B. dann der Fall, wenn sich nur das erste Füllgut 3 oder nur das zweite Füllgut 5 im Behälter 1 befindet, oder wenn die beiden Füllgüter 3, 5 derart vermischt sind, dass sich im Behälter 1 eine einzige Emulsionsschicht E befindet. Diese drei Befüllsituationen, sowie die zugehörigen Echosignale sind in den Figuren 4 und 4a dargestellt.

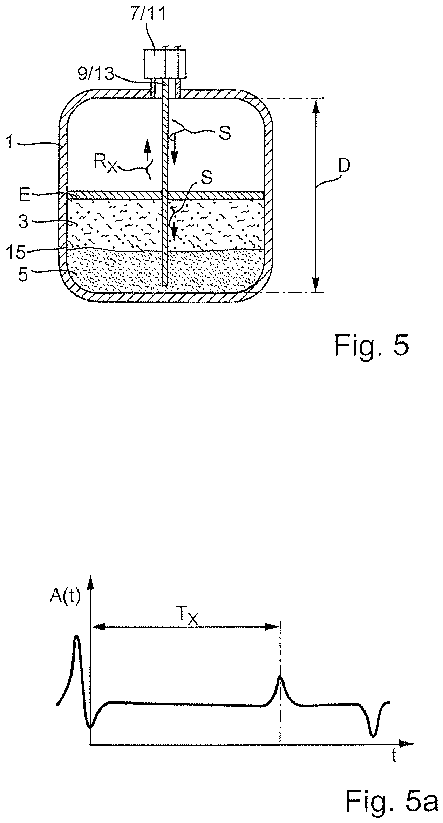

Es ist auch dann der Fall, wenn sich das erste und das zweite Füllgut 3, 5 im Behälter 1 befinden, und sich auf der Oberfläche des ersten Füllguts 3 Schaum gebildet hat. Diese Befüllsituation, sowie das zugehörige Echosignal sind in den Figuren 5 und 5a dargestellt. Der Schaum ist in Fig. 5 schraffiert eingezeichnet, und verschlechtert die Reflektionseigenschaften an dieser Oberfläche derart, dass in der Regel kein durch eine Reflektion an dieser Mediengrenze verursachtes Echo mehr identifiziert werden kann und dementsprechend keine Laufzeitmessung hierzu durchgeführt werden kann.

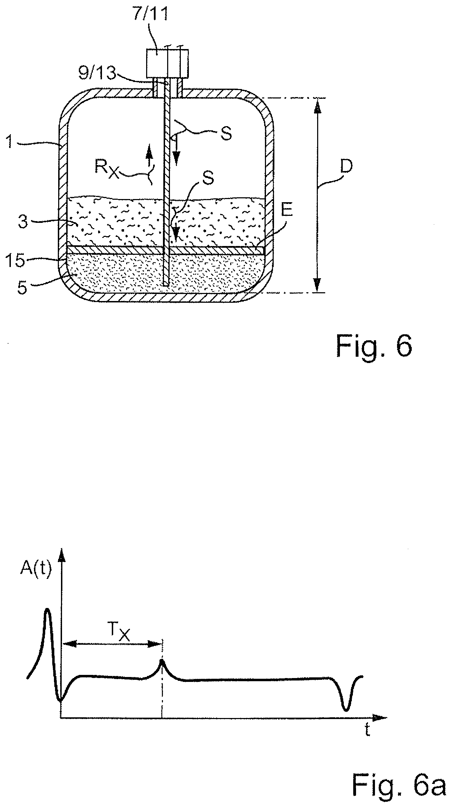

Es ist weiter der Fall, wenn sich das erste und das zweite Füllgut 3,5 im Behälter 1 befinden, und sich zwischen den beiden Füllgütern 3, 5 eine Emulsionsschicht E ausgebildet hat, die dazu führt, dass in diesem Bereich keine ausgeprägte Reflektion stattfindet. Diese Befüllsituation, sowie das zugehörige Echosignal sind in den Figuren 6 und 6a dargestellt. Auch hier kann in der Regel kein durch eine Reflektion im Bereich der Emulsionsschicht E verursachtes Maximum mehr identifiziert werden und es kann dementsprechend keine Laufzeitmessung hierzu durchgeführt werden.

Ein weiterer Fall tritt dann ein, wenn sich auf dem unteren zweiten Füllgut 5 ausschließlich eine durch eine Durchmischung der beiden Füllgüter 3 und 5 gebildete Emulsionsschicht E befindet. Diese Befüllsituation ist bereits in Fig. 3 dargestellte. Umgekehrt kann sich auch unten im Behälter 1 eine durch eine Durchmischung der beiden Füllgüter 3 und 5 gebildete Emulsionsschicht befinden, auf der eine ausschließlich aus dem ersten Füllgut 3 bestehende Schicht aufliegt. Diese Befüllsituation ist in Fig. 2 dargestellt. In beiden Fällen findet in der Regel an der Mediengrenze zwischen der Emulsion E und dem dazu benachbarten Füllgut, Füllgut 3 in Fig. 2 und Füllgut 5 in Fig. 3, keine ausgeprägte Reflektion statt, die eine Laufzeitmessung ermöglichen würde. Der entsprechende Verlauf der Echofunktion ist in den Figuren 2b und 3b dargestellt.

In allen Fällen, in denen nur eine Laufzeit Tx und die Kapazität C gemessen werden konnten, wird zunächst eine Hypothese aufgestellt, die besagt an welcher im Behälter 1 befindlichen Füllgutoberfläche die für die gemessen Laufzeit Tx maßgebliche Reflektion statt gefunden hat. Die Hypothese kann entweder lauten: 'Die Reflektion hat an der Füllgutoberfläche des ersten Füllguts 3 stattgefunden', oder sie kann lauten: 'Die Reflektion hat an der Füllgutoberfläche des zweiten Füllguts 5 stattgefunden'.

In einem nächsten Schritt wird auf der Grundlage dieser Hypothese für jedes im Behälter 1 enthaltene Füllgut 3, 5 die Ruhelage von dessen Füllgutoberfläche bestimmt, die diese einnimmt, wenn sich die Füllgüter 3, 5 im Ruhezustand befinden, in dem sich weder Schaum noch Emulsion im Behälter 1 befindet. Dies geschieht anhand der drei oben angeführten Gleichungen (1), (2) und (3).

Dabei wird vorzugsweise als erste Hypothese angenommen, dass die gemessene Laufzeit Tx der ersten Laufzeit T1 entspricht, die auf eine Reflektion an der Füllgutoberfläche des ersten Füllguts 3 zurück zu führen ist. Entsprechend wird anhand von Gleichung (1) und (3) die Füllhöhe H1 des ersten Füllguts 3 und die Füllhöhe H2 des zweiten Füllguts 5 berechnet. Hierfür gilt unter der Hypothese Tx = T1:

$$H1 = \frac{C - C0 - a\,(D - 0.5\ v_0\ Tx)}{b - a}$$

$$H2 = \frac{C - C0 - b\,(D - 0.5\ v_0\ Tx)}{a - b}$$

In Gleichung (1) geht nur die gesamte Füllhöhe G = H1 +H2 ein, die beide Füllgüter 3, 5 zusammen im Behälter 1 einnehmen ein. Die gesamte Füllhöhe G ist aber unabhängig davon, ob die Füllgüter 3, 5 in getrennten Schichten im Behälter 1 angeordnet sind, oder ganz oder teilweise zu einer Emulsion E durchmischt wurden. Das gleiche gilt für die gemessene Kapazität C. Sie ist ausschließlich abhängig von den Mengen der im Behälter 1 enthaltenen beiden Füllgütern 3, 5. Sie ist jedoch völlig unabhängig davon, ob die Füllgüter 3, 5 in getrennten Schichten oder in vollständiger oder teilweiser Durchmischung vorliegen. Einsetzen der gemessenen Kapazität C und der anhand der Hypothese festgelegten kürzeren Laufzeit Tx als T1 in obige Gleichungen liefert folglich die Füllhöhen H1, H2, die diese Füllgüter 3, 5 im Ruhezustand im Behälter 1 einnehmen würden, nachdem sich die Emulsionsschicht E in ihre Bestandteile aufgetrennt hat.

Es wird die Richtigkeit der rechnerisch bestimmten Lagen anhand von physikalischen Randbedingungen überprüft.

Dabei wird insbesondere geprüft, ob sich die unter der Hypothese ermittelten Lagen der Füllgutoberflächen innerhalb des Behälters 1 liegen. Hierzu muss jede Füllhöhe H1 und H2 größer gleich Null sein und es muss die Summe der beiden Füllhöhen H1 + H2 kleiner als der von einer Einbauhöhe des Messgeräts 7 abhängige Abstand D zwischen Sender und Empfänger des elektromagnetischen Signals S und dem Behälterboden sein. Die Füllhöhe H1 muss sogar echt größer null sein, damit die Hypothese, dass die für die Laufzeit Tx maßgebliche Reflektion an der Füllgutoberfläche des ersten Füllguts 3 erfolgt ist, bestätigt werden kann.

Erfüllen die auf diese Weise bestimmten Füllhöhen H1 und H2 die physikalischen Randbedingungen, so wird die Hypothese als richtig bestätigt und die beiden Füllhöhen H1, H2 bilden das mit dem Verfahren erzielte Messergebnis. Anhand der Füllhöhen H1, H2 können die Ruhelagen in jeder gewünschten Form angegeben werden können. Die Lagen können beispielsweise unmittelbar in Form der Füllhöhen H1 und H2 ausgegeben werden. Sie können in Form eines Abstandes der jeweiligen Füllgutoberfläche vom Behälterboden (D2 = H2; D1 = H1 + H2) oder in Form eines Abstandes der jeweiligen Füllgutoberfläche zu Sender und Empfänger des elektromagnetischen Signals S (D1 = D - H1 - H2; D2 = D - H1) angegeben werden. Alternativ können sie aber auch in Form eines Abstandes zwischen der jeweiligen Füllgutoberfläche zu einer maximal zulässigen Füllstandsobergrenze $L_{max}$ (D1 = $L_{max}$ - H1 - H2; D2 = $L_{max}$ - H1) angegeben werden. Sofern die Sonde nicht bis zum Behälterboden reicht, ist hier der Abstand zwischen dem Behälterboden und dem im Behälter 1 befindlichen Ende der Sonde als additive Größe mit zu berücksichtigen.

Wird die Hypothese als richtig bestätigt, so liegt im Behälter 1 einer der beiden nachfolgend aufgeführten Zustände vor:

Zustand 1: H1 > 0 und H2 ≈ 0

Im Behälter 1 befindet sich ausschließlich das erste Füllgut 3. Anhand des erfindungsgemäßen Verfahrens wird in diesem Fall die Lage der Füllgutoberfläche des ersten Füllguts 3 bestimmt und festgestellt, dass das zweite Füllgut 5 nicht im Behälter 1 enthalten ist.

Zustand 2: H1 > 0 und H2 > 0

Im Behälter 1 befindet sich das erste und das zweite Füllgut 3, 5.
In diesem Fall kann es sein, dass sich im Behälter 1 eine Emulsionsschicht E ausgebildet hat, die durch eine Durchmischung der beiden Füllgüter 3, 5 in einem begrenzten Bereich in dem die beiden Füllguter 3, 5 aufeinander treffen, verursacht wurde (siehe Fig. 6). Ebenso kann es sein, dass eine Schicht des ersten Füllguts 3 auf einer aus beiden Füllgütern 3, 5 bestehenden Emulsionsschicht schwimmt (siehe Fig. 2) oder eine Emulsionsschicht E auf einer Schicht des zweiten Füllguts 5 schwimmt (siehe Fig. 3). Ebenso kann sich aber auch eine Emulsionsschicht E ausgebildet haben, die sich über die gesamte durch die Summe der beiden Füllhöhen H1, H2 gegebene Gesamtfüllhöhe G = H1 +H2 erstreckt (siehe Fig. 4). Höhe und Lage der vorgenannten Emulsionsschichten können mit dem erfindungsgemäßen Verfahren nicht bestimmt werden.

Konnte die erste Hypothese anhand der Randbedingungen nicht bestätigt werden, so wird das Verfahren mit der zweiten Hypothese wiederholt. Dabei wird, um bei dem vorgenannten Beispiel zu bleiben nun als Hypothese angenommen, dass die gemessene Laufzeit Tx der zweiten Laufzeit T2 entspricht, die auf eine Reflektion an der Füllgutoberfläche des zweiten Füllguts 5 zurück zu führen ist. Unter dieser Hypothese wird anhand von Gleichung (2) und (3) die Füllhöhe H1 des ersten Füllguts 3 und die Füllhöhe H2 des zweiten Füllguts 5 berechnet. Hierfür gilt unter der Hypothese Tx = T2:

$$H1 = \frac{C - C0 - a\,(D - 0.5\,v_0\,Tx)}{b - a\,(1 - v_0\,/\,v_1)}$$

$$H2 = \frac{(C - C0)\,(1 - v_0\,/\,v_1) - b\,(D - 0.5\,v_0\,Tx)}{a\,(1 - v_0\,/\,v_1) - b}$$

Auch hier wird die Richtigkeit der Hypothese anhand der rechnerisch bestimmten Lagen anhand von physikalischen Randbedingungen überprüft.

Dabei wird insbesondere geprüft, ob die unter der Hypothese ermittelten Lagen der Füllgutoberflächen innerhalb des Behälters 1 liegen. Hierzu muss jede Füllhöhe H1 und H2 größer gleich Null sein und es muss die Summe der beiden Füllhöhen H1 + H2 kleiner als der von einer Einbauhöhe des Messgeräts 7 abhängige Abstand D zwischen Quelle und Empfänger des elektromagnetischen Signals S und dem Behälterboden sein. Die Füllhöhe H2 muss sogar echt größer null sein, damit die Hypothese, dass die für die Laufzeit Tx maßgebliche Reflektion an der Füllgutoberfläche des zweiten Füllguts 5 erfolgt ist, bestätigt werden kann.

Erfüllen die auf diese Weise bestimmten Füllhöhen H1 und H2 die physikalischen Randbedingungen, so wird die Hypothese als richtig bestätigt und die beiden Füllhöhen H1, H2 stellen das Messergebnis des Verfahrens dar, anhand dessen die Ruhelagen der Füllgutoberflächen der im Behälter 1 enthaltenen Füllgüter 3 in jeder gewünschten Form angegeben werden können. Die Lagen können beispielsweise unmittelbar in Form der Füllhöhen H1 und H2 ausgegeben werden. Sie können in Form eines Abstandes der jeweiligen Füllgutoberfläche vom Behälterboden (D2 = H2; D1 = H1 + H2) oder in Form eines Abstandes der jeweiligen Füllgutoberfläche zu Sender und Empfänger des elektromagnetischen Signals (D1 = D - H1 - H2; D2 = D - H1) angegeben werden. Alternativ können sie aber auch in Form eines Abstandes zwischen der jeweiligen Füllgutoberfläche zu einer maximal zulässigen Füllstandsobergrenze $L_{max}$ (D1 = $L_{max}$- H1 - H2; D2 = $L_{max}$- H1) angegeben werden. Sofern die Sonde nicht ganz bis zum Behälterboden reicht, ist auch hier der Abstand zwischen dem im Behälter befindlichen Ende der Sonde und dem Behälterboden als additive Größe zu berücksichtigen.

Wird die Hypothese als richtig bestätigt, so entspricht das Ergebnis einem der beiden folgenden Befüllzustände im Behälter 1:

Befüllzustand 1: H2 > 0 und H1 ≈ 0

Im Behälter 1 befindet sich ausschließlich das zweite Füllgut 5 (siehe Fig. 4). Anhand des erfindungsgemäßen Verfahrens wird in diesem Fall die Ruhelage der Füllgutoberfläche des zweiten Füllguts 5 bestimmt und festgestellt, dass das erste Füllgut 3 nicht im Behälter 1 enthalten ist.

Befüllzustand 2: H1 > 0 und H2 > 0

Im Behälter 1 befindet sich das erste und das zweite Füllgut 3, 5.

In diesem Fall kann es sein, dass sich im Behälter 1 auf dem ersten Füllgut 3 Schaum gebildet hat, der dazu führt, dass an der Oberfläche des ersten Füllguts 3 keine messbare Reflektion statt gefunden hat. Schaum verhindert zwar diese Reflektion, er führt jedoch in der Regel nicht zu einer deutlichen Veränderung der Füllhöhe des oberen Füllguts gegenüber dessen Füllhöhe H1 in der Ruhelage. Die beiden mit dem erfindungsgemäßen Verfahren bestimmten Füllhöhen H1 und H2 geben also auch in diesem Fall die Füllhöhen der beiden Füllgüter 3, 5 im Ruhezustand, in dem kein Schaum mehr vorliegt, an.

Theoretisch wäre es auch denkbar, dass der in Fig. 3 dargestellte Fall vorliegt, bei dem sich durch eine Durchmischung der beiden Füllguter 3, 5 eine Emulsionsschicht ausgebildet hat, die auf einer ausschließlich aus dem zweiten Füllgut 5 bestehenden Schicht im Behälter 1 aufliegt. Dies wäre dann der Fall, wenn ausschließlich die Laufzeit eines an der Füllgutoberfläche des unteren Füllguts 5 reflektierten Signals gemessen worden wäre. In der Praxis ist jedoch der Impedanzsprung zwischen dem Oberhalb der Füllgüter 3, 5 im Behälter 1 befindlichen Medium und der Emulsion E sehr viel höher als der Impedanzsprung der an dem Übergang von der Emulsion E zu dem zweiten Füllgut 5 auftritt. Wenn die Laufzeit des an der Füllgutoberfläche des unteren Füllguts 5 reflektierten Signals gemessen werden kann, wird zwangläufig auch die Laufzeit des an der Oberfläche der Emulsionsschicht E reflektierten Signals gemessen werden. In Verbindung mit zwei gemessenen Laufzeiten ist dieser Fall bereits oben beschrieben worden.

Zusätzlich zu den beschriebenen Fällen, in denen sich immer mindesten ein Füllgut 3, 5 im Behälter 1 befindet, kann mit dem beschriebenen Füllstandsmessgerät 7/11 natürlich auch das Vorliegen eines leeren Behälters 1 erkannt werden. Dies ist immer dann der Fall, wenn die gemessene Kapazität C gleich der Grundkapazität C0 ist, und keine Laufzeit gemessen werden konnte, die auf eine Reflektion an einer innerhalb des Behälters 1, oberhalb des Behälterbodens befindlichen Mediengrenze zurückführbar ist.

**Bezugszeichenliste**

1 Behälter
3 erstes Füllgut
5 zweites Füllgut
7 nach dem Laufzeitprinzip arbeitendes Füllstandsmessgerät
9 Wellenleiter
11 kapazitives Füllstandsmessgerät
13 kapazitive Sonde
15 Referenzelektrode

**Patentansprüche**

1. Verfahren zur Füllstandsmessung in einem Behälter (1),
   in dem sich eine Menge eines ersten Füllguts (3) und/oder eine Menge eines zweiten Füllgut (5) befinden, wobei das erste Füllgut (3) ein geringeres spezifisches Gewicht aufweist als das zweite Füllgut (5), und die beiden Füllgüter (3, 5) verschiedene Dielektrizitätskonstanten ($\varepsilon$) aufweisen, bei dem

   - ein elektromagnetisches Signal (S) in den Behälter (1) gesendet wird,
   - an mindestens einer durch die im Behälter (1) enthaltenen Füllgüter (3, 5) erzeugten Mediengrenze eine Reflektion stattfindet, bei der ein Anteil (Rx, Ry) des Signals (S) reflektiert wird, und
   - für jeden reflektierten Anteil (Rx, Ry) eine von der Lage der die Reflektion auslösenden Mediengrenze abhängige Laufzeit (Tx, Ty) gemessen wird, die dieser Anteil (Rx, Ry) des Signals (S) für den Weg zu dieser Mediengrenze und zurück benötigt,
   - eine von den Mengen der im Behälter (1) befindlichen Füllgütern (3, 5) abhängige Kapazität (C) zwischen einer kapazitiven Sonde (13) und einer Referenzelektrode (15) gemessen wird, und
   - anhand der gemessenen Kapazität (C) und der gemessenen Laufzeiten (Tx, Ty) für jedes im Behälter (1) enthaltene Füllgut (3, 5) eine Lage bestimmt wird, die der Lage entspricht, die die Füllgutoberfläche des jeweiligen Füllguts (3, 5) aufgrund der Menge des im Behälter (1) enthaltenen ersten Füllguts (3) und der Menge des im Behälter (1) enthaltenen zweiten Füllguts (5) einnimmt, wenn die gesamte Menge jedes Füllguts (3, 5) im Behälter (1) eine einzige nur dieses Füllgut (3, 5) enthaltende Schicht ausbildet, bei dem
   für den Fall, dass nur eine Laufzeit (Tx) bestimmt werden konnte,
   - eine Hypothese dafür aufgestellt wird, an welcher Mediengrenze die für die gemessene Laufzeit (Tx) maßgebliche Reflektion stattgefunden hat,
   - für jedes im Behälter (1) enthaltene Füllgut (3, 5) anhand der gemessenen Laufzeit (Tx), der gemessenen Kapazität (C) und
   der Hypothese die Lage bestimmt wird, die die Füllgutoberfläche des jeweiligen Füllguts (3, 5) aufgrund der Menge des im Behälter (1) enthaltenen ersten Füllguts (3) und der Menge des im Behälter (1) enthaltenen zweiten Füllguts (5) einnimmt, wenn die gesamte Menge jedes Füllguts (3, 5) im Behälter (1) eine einzige nur dieses Füllgut (3, 5) enthaltende Schicht ausbildet,
   - die auf der Grundlage der Hypothese bestimmten Lagen anhand von physikalischen Randbedingungen auf deren Richtigkeit überprüft werden, und
   - dieses Verfahren mit einer geänderten Hypothese wiederholt wird, falls die Überprüfung einen Widerspruch ergibt.

2.  Verfahren zur Füllstandsmessung nach Anspruch 1, bei dem anhand dieser Lagen festgestellt wird, ob sich nur das erste Füllgut (3), nur das zweite Füllgut (3) oder beide Füllgüter (3, 5) im Behälter befinden.

3.  Verfahren zur Füllstandsmessung nach Anspruch 1, bei dem

    - eine von der Lage einer ersten Mediengrenze abhängige erste Laufzeit (Tx),
    - eine von der Lage einer zweiten Mediengrenze abhängige zweite Laufzeit (Ty) und die Kapazität (C) gemessen werden, und
    - anhand von zwei dieser drei Messgrößen für jedes im Behälter (1) enthaltene Füllgut (3, 5) eine Lage bestimmt wird, die der Lage entspricht, die die Füllgutoberfläche des jeweiligen Füllguts (3, 5) aufgrund der Menge des im Behälter (1) enthaltenen ersten Füllguts (3) und der Menge des im Behälter (1) enthaltenen zweiten Füllguts (5) einnimmt, wenn die gesamte Menge jedes Füllguts (3, 5) im Behälter (1) eine einzige nur dieses Füllgut (3, 5) enthaltende Schicht ausbildet, und
    - die Ergebnisse dieser Ableitungen anhand der dritten Messgröße überprüft werden.

4.  Verfahren zur Füllstandsmessung nach Anspruch 1, bei dem

    - eine von der Lage einer ersten Mediengrenze abhängige erste Laufzeit (Tx),
    - eine von der Lage einer zweiten Mediengrenze abhängige zweite Laufzeit (Ty), und die Kapazität (C) gemessen werden,
    - anhand der gemessenen ersten Laufzeit (Tx), der gemessenen zweiten Laufzeit (Ty) und der Kapazität (C) mindestens eine material-spezifische Konstante des ersten Füllguts (5) ermittelt wird, und
    - die Lagen, die die Füllgutoberfläche des jeweiligen Füllguts (3, 5) aufgrund der Menge des im Behälter (1) enthaltenen ersten Füllguts (3) und der Menge des im Behälter (1) enthaltenen zweiten Füllguts (5) einnehmen, wenn die gesamte Menge jedes Füllguts (3, 5) im Behälter (1) eine einzige nur dieses Füllgut (3, 5) enthaltende Schicht ausbildet, anhand von mindestens zwei der drei gemessenen Größen und der material-spezifischen Konstante ermittelt werden.

5.  Verfahren zur Füllstandsmessung nach Anspruch 4, bei dem die material-spezifische Konstante eine Dielektrizitätskonstante ($\varepsilon$) des ersten Füllguts (3) ist.

6.  Verfahren zur Füllstandsmessung nach Anspruch 5, bei dem anhand der Dielektrizitätskonstante ($\varepsilon$) des ersten Füllguts (3) eine Ausbreitungsgeschwindigkeit ($v_1$) der elektromagnetischen Signale (S) in dem ersten Füllgut (3) und ein Kapazitätszunahmefaktor (b) des ersten Füllguts (3) bestimmt wird, wobei der Kapazitätszunahmefaktor (b) eine Zunahme der Kapazität (C) in Abhängigkeit von einer Füllhöhe (H1) des ersten Füllguts (3) angibt.

7.  Verfahren zur Füllstandsmessung nach Anspruch 1, bei dem eine physikalische Randbedingung darin besteht, das die Lagen innerhalb des Behälters (1) liegen.

8.  Verfahren zur Füllstandsmessung nach Anspruch 1, bei dem die Lagen, die die Füllgutoberfläche der einzelnen Füllgüter (3, 5) aufgrund der Menge des im Behälter (1) enthaltenen ersten Füllguts (3) und der Menge des im Behälter (1) enthaltenen zweiten Füllguts (5) einnehmen, wenn die gesamte Menge jedes Füllguts (3, 5) im Behälter (1) enthaltenen Füllguts (3, 5) eine einzige nur dieses Füllgut (3, 5) enthaltende Schicht ausbildet

    - in Form von Füllhöhen (H1, H2) bestimmt werden, die die Füllgüter (3, 5) Behälter einnehmen, oder
    - in Form eines Abstandes (D1, D2) der jeweiligen Füllgutoberfläche vom Behälterboden, oder
    - in Form eines Abstandes (D1, D2) der jeweiligen Füllgutoberfläche zu Sender und Empfänger des elektromagnetischen Signals (S), oder
    - in Form eines Abstandes (D1, D2) zwischen der jeweiligen Füllgutoberfläche zu einer maximal zulässigen Füllstandsobergrenze ($L_{max}$) im Behälter (1) angegeben werden.

9.  Verfahren zur Füllstandsmessung nach einem der vorangehenden Ansprüche, bei dem die Laufzeitmessungen und die Kapazitätsmessungen mit einem einzigen Füllstandsmessgerät (7/11) ausgeführt werden, das eine einzige Sonde (9/13) aufweist, die sowohl als kapazitive Sonde (13) als auch als Wellenleiter (9) für die elektromagnetischen Signale S dient.

**Claims**

1. Procedure for measuring the level in a vessel (1) which contains a quantity of a first product (3) and/or a quantity of a second product (5), wherein the first product (3) has a lower specific gravity than the second product (5), and the two products (3, 5) have different dielectric constants ($\varepsilon$), wherein in said

   - an electromagnetic signal (S) is transmitted into the vessel (1),
   - a reflection takes place at at least one medium boundary generated by the products (3, 5) contained in the vessel (1), wherein a part (Rx, Ry) of the signal (S) is reflected during said reflection, and
   - a time-of-flight (Tx, Ty), which depends on the position of the medium boundary triggering the reflection, is measured for each reflected part (Rx, Ry), said time-of-flight being the time this part (Rx, Ry) of the signal (S) needs to travel the distance to this medium boundary and back,
   - a capacitance (C), which depends on the quantities of the products (3, 5) located in the vessel (1), is measured between a capacitance probe (13) and a reference electrode (15), and
   - on the basis of the capacitance (C) and the times-of-flight (Tx, Ty) measured for each of the products (3, 5) in the vessel (1), a position is determined that corresponds to the position that the surface of the individual product (3, 5) adopts due to the quantity of the first product (3) contained in the vessel (1) and the quantity of the second product (5) contained in the vessel (1) if the total quantity of each product (3, 5) in the vessel (1) forms a single layer containing only this product (3, 5), wherein in the case that it was only possible to determine one time of flight (Tx),
   - a hypothesis is put forward concerning the medium boundary at which the reflection determining the time-of-flight (Tx) took place,
   - the position that the surface of the individual product (3, 5) adopts due to the quantity of the first product (3) contained in the vessel (1) and the quantity of the second product (5) contained in the vessel (1) if the total quantity of each product (3, 5) in the vessel (1) forms a single layer containing only this product (3, 5) is determined for each product (3, 5) found in the vessel (1) using the measured time-of-flight (Tx), the measured capacitance (C) and the hypothesis,
   - the correctness of the positions determined on the basis of the hypothesis are checked based on the physical boundary conditions,
   and
   - this procedure is repeated with a modified hypothesis if the check has a contradictory result.

2. Procedure designed for level measurement as claimed in Claim 1, wherein these positions are used to determine whether the vessel only contains the first product (3), or only the second product (5) or both products (3, 5).

3. Procedure designed for level measurement as claimed in Claim 1, wherein

   - a first time-of-flight (Tx), which depends on the position of a first medium boundary, is measured
   - a second time-of-flight (Ty), which depends on the position of a second medium boundary, and the capacitance (C) are measured, and
   - on the basis of two of these three measured variables, a position is determined for each product (3, 5) contained in the vessel (1), said position corresponding to the position that the surface of the individual product (3, 5) adopts due to quantity of the first product (3) contained in the vessel (1) and due to the quantity of the second product (5) contained in the vessel (1) if the total quantity of each product (3, 5) in the vessel (1) forms a single layer containing only this product (3, 5), and
   - the results of these deductions are checked using the third measured variable.

4. Procedure designed for level measurement as claimed in Claim 1, wherein

   - a first time-of-flight (Tx), which depends on the position of a first medium boundary, is measured
   - a second time-of-flight (Ty), which depends on the position of a second medium boundary, and the capacity (C) are measured,
   - on the basis of the measured first time-of-flight (Tx), the measured second time of flight (Ty) and the capacity (C), at least one material-specific constant of the first product (5) is determined, and
   - the positions, which the surface of the individual product (3, 5) adopts due to the quantity of the first product (3) contained in the vessel (1) and due to the quantity of the second product (5) contained in the vessel (1) if the total quantity of each product (3, 5) in the vessel (1) forms a single layer containing only this product (3, 5), are determined using at least two of the three measured variables and the material-specific constant.

**5.** Procedure designed for level measurement as claimed in Claim 4, wherein the material-specific constant is a dielectric constant ($\varepsilon$) of the first product (3).

**6.** Procedure designed for level measurement as claimed in Claim 5, wherein a propagation speed ($v_1$) of the electromagnetic signals (S) in the first product (3) and a capacity increase factor (b) of the first product (3) are determined on the basis of the dielectric constant ($\varepsilon$) of the first product (3), wherein the capacity increase factor (b) indicates an increase in the capacity (C) depending on a level (H1) of the first product (3).

**7.** Procedure designed for level measurement as claimed in Claim 1, wherein a physical boundary condition is that the positions are located within the vessel (1).

**8.** Procedure designed for level measurement as claimed in Claim 1, wherein the positions, which the surface of the individual products (3, 5) adopts due to the quantity of the first product (3) contained in the vessel (1) and due to the quantity of the second product (5) contained in the vessel (1) if the total quantity of each product (3, 5) in the vessel (1) forms a single layer containing only this product (3, 5),

- are determined in the form of filling heights (H1, H2) which the products (3, 5) adopt in the vessel, or
- are indicated in the form of a distance (D1, D2) of the surface of the individual product from the vessel floor, or
- are indicated in the form of a distance (D1, D2) of the surface of the individual product from the transmitter and receiver of the electromagnetic signal (S), or
- are indicated in the form of a distance (D1, D2) between the surface of the individual product from a maximum level limit ($L_{max}$) permitted in the vessel (1).

**9.** Procedure designed for level measurement as claimed in one of the previous claims, wherein the time-of-flight measurements and the capacitance measurements are performed with a single level transmitter (7/11), which has a single probe that serves as both a capacitance probe (13) and as a wave guide (9) for the electromagnetic signals (S).

## Revendications

**1.** Procédé destiné à la mesure de niveau dans un réservoir (1), dans lequel se trouve une quantité d'un premier produit (3) et/ou une quantité d'un deuxième produit (5), le premier produit (3) présentant un poids spécifique inférieur à celui du deuxième produit (5), et les deux produits (3, 5) présentant des constantes diélectriques ($\varepsilon$) différentes, procédé pour lequel

- un signal électromagnétique (S) est émis dans le réservoir (1),
- a lieu, au moins à travers une limite générée par les produits (3, 5) contenus dans le réservoir (1), une réflexion pour laquelle une partie (Rx, Ry) du signal (S) est réfléchie, et
- on mesure, pour chaque partie (Rx, Ry) réfléchie, un temps de propagation (Tx, Ty) dépendant de la position de la limite de produit déclenchant la réflexion, dont cette partie (Rx, Ry) du signal (S) a besoin pour parcourir la distance aller retour par rapport à cette limite de produit,
- est mesurée une capacité (C) dépendant des quantités des produits (3, 5) se trouvant dans le réservoir (1), entre une sonde capacitive (13) et une électrode de référence (15), et
- on détermine, sur la base de la capacité (C) mesurée et des temps de propagation (Tx, Ty) mesurés pour chacun des produits (3, 5) contenus dans le réservoir (1), une position qui correspond à la position qu'adopte la surface du produit (3, 5) respectif en raison de la quantité de premier produit (3) contenue dans le réservoir (1) et de la quantité de deuxième produit (5) contenue dans le réservoir (1) lorsque la quantité totale de chacun des produits (3, 5) se trouvant dans le réservoir (1) forme une unique couche contenant seulement ce produit (3, 5), couche pour laquelle, pour le cas où un seul temps de propagation (Tx) n'a pu être déterminé,
- une hypothèse est émise concernant la limite de produit à laquelle a eu lieu la réflexion déterminante pour le temps de propagation (Tx) mesuré,
- on détermine, pour chacun des produits (3, 5) contenus dans le réservoir (1) au moyen du temps de propagation (Tx) mesuré, de la capacité (C) mesurée et de l'hypothèse, la position qu'adopte la surface du produit (3, 5) respectif en raison de la quantité de premier produit (3) contenue dans le réservoir (1) et de la quantité de deuxième produit (5) contenue dans le réservoir (1) lorsque la quantité totale de chacun des produits (3, 5) se trouvant dans le réservoir (1) forme une unique couche contenant seulement ce produit (3, 5),
- les positions déterminées sur la base de l'hypothèse sont vérifiées quant à leur exactitude au moyen de conditions limites physiques, et

- ce procédé est répété avec une hypothèse modifiée, dans le cas où la vérification donne lieu à une contradiction.

2. Procédé destiné à la mesure de niveau selon la revendication 1, pour lequel on détermine, sur la base de ces positions, si seul le premier produit (3), si seul le deuxième produit (5) ou si les deux produits (3, 5) se trouvent dans le réservoir.

3. Procédé destiné à la mesure de niveau selon la revendication 1, pour lequel sont mesurés

- un premier temps de propagation (Tx) dépendant de la position de la première limite de produit
- un deuxième temps de propagation (Ty) dépendant de la position de la première limite de produit, ainsi que la capacité (C), et
- on détermine au moyen de deux parmi ces trois grandeurs de mesure, pour chacun des produits (3, 5) contenus dans le réservoir (1), une position qui correspond à la position qu'adopte la surface de chacun des produits (3, 5) en raison de la quantité de premier produit (3) contenue dans le réservoir (1) et de la quantité de deuxième produit (5) contenue dans le réservoir (1) lorsque la quantité totale de chacun des produits (3, 5) se trouvant dans le réservoir (1) forme une unique couche contenant seulement ce produit (3, 5), et
- les résultats de ces déductions sont vérifiés au moyen de la troisième grandeur de mesure.

4. Procédé destiné à la mesure de niveau selon la revendication 1, pour lequel

- sont mesurés un premier temps de propagation (Tx) dépendant de la position d'une première limite de produit
- un deuxième temps de propagation (Ty) dépendant de la position d'une deuxième limite de produit, ainsi que la capacité (C),
- on détermine, sur la base du premier temps de propagation (Tx), du deuxième temps de propagation (Ty) et de la capacité (C), au moins une constante spécifique du matériau du premier produit (5), et
- les positions, qu'adopte la surface du produit (3, 5) respectif en raison de la quantité de premier produit (3) contenue dans le réservoir (1) et de la quantité de deuxième produit (5) contenue dans le réservoir (1) lorsque la quantité totale de chacun des produits (3, 5) se trouvant dans le réservoir (1) forme une unique couche contenant seulement ce produit (3, 5), sont déterminées au moyen d'au moins deux parmi les trois grandeurs mesurées et de la constante spécifique du matériau.

5. Procédé destiné à la mesure de niveau selon la revendication 4, pour lequel la constante spécifique au matériau est une constante diélectrique ($\varepsilon$) du premier produit (3).

6. Procédé destiné à la mesure de niveau selon la revendication 5, pour lequel on détermine, au moyen de la constante diélectrique ($\varepsilon$) du premier produit (3), une vitesse de propagation ($v_1$) des signaux électromagnétiques (S) dans le premier produit (3) et un facteur d'accroissement de capacité (b) du premier produit (3), le facteur d'accroissement de capacité (b) indiquant un accroissement de la capacité (C) en fonction de la hauteur de remplissage (H1) du premier produit (3).

7. Procédé destiné à la mesure de niveau selon la revendication 1, pour lequel une condition limite physique consiste en ce que les positions se situent au sein du réservoir (1).

8. Procédé destiné à la mesure de niveau selon la revendication 1, pour lequel les positions qu'adopte la surface des différents produits (3, 5) en raison de la quantité de premier produit (3) contenue dans le réservoir (1) et de la quantité de deuxième produit (5) contenue dans le réservoir (1) lorsque la quantité totale de chacun des produits (3, 5) se trouvant dans le réservoir (1) forme une unique couche contenant seulement ce produit (3, 5)

- sont déterminées sous la forme de hauteurs de remplissage (H1, H2) qu'adoptent les produits (3, 5), ou
- sont indiquées sous la forme d'une distance (D1, D2) de la surface de produit respective par rapport au fond du réservoir, ou
- sous la forme d'une distance (D1, D2) de la surface de produit respective par rapport à l'émetteur et au récepteur du signal électromagnétique (S), ou
- sous la forme d'une distance (D1, D2) entre la surface de produit respective et une limite supérieure de niveau ($L_{max}$) maximale admissible dans le réservoir (1).

9. Procédé destiné à la mesure de niveau selon l'une des revendications précédentes, pour lequel les mesures de temps de propagation et les mesures de capacité sont effectuées à l'aide d'un unique appareil de mesure de niveau (7/11), qui comporte une unique sonde (9/13), qui sert à la fois de sonde capacitive (13) et de guide d'ondes (9) pour les signaux électromagnétiques (S).

Fig. 1

Fig. 1a

Fig. 2

Fig. 2a

Fig. 2b

Fig. 3

Fig. 3a

Fig. 3b

Fig. 4

Fig. 4a

Fig. 5

Fig. 5a

Fig. 6

Fig. 6a

**IN DER BESCHREIBUNG AUFGEFÜHRTE DOKUMENTE**

**In der Beschreibung aufgeführte Patentdokumente**

- DE 10037715 A1
- DE 19510484 A1